# EUROPÄISCHE PATENTSCHRIFT

(11) **EP 0 630 317 B1**
(45) Veröffentlichungstag und Bekanntmachung des Hinweises auf die Patenterteilung: **05.04.2000**
(21) Anmeldenummer: 94905015.7
(22) Anmeldetag: 08.01.1994
(51) Int. Cl.: B32B 3/16, B44C 1/20, B29B 17/00, B31F 1/07

(54) **WAND- ODER MÖBELVERKLEIDUNG, INSBESONDERE WANDTAPETE**
WALL OR FURNITURE LINING, IN PARTICULAR WALLPAPER
REVETEMENT MURAL OU REVETEMENT D'AMEUBLEMENT, NOTAMMENT PAPIER MURAL

(30) Priorität: 09.01.1993 DE 4300421; 29.09.1993 DE 4333188
(43) Veröffentlichungstag der Anmeldung: 28.12.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9400036
(87) Internationale Veröffentlichungsnummer: WO9415779

(56) Entgegenhaltungen:
- DE-A- 1 947 856
- DE-A- 2 043 418
- DE-A- 3 108 512
- GB-A- 2 100 191
- GB-A- 2 144 346
- US-A- 3 121 642
- US-A- 4 636 423
- US-A- 4 847 118

## Beschreibung

Die Erfindung betrifft eine Wand- oder Möbelverkleidung, insbesondere Wandtapete, mit einem Träger, insbesondere aus Papier, und mit auf diesem regelmäßig oder unregelmäßig angeordneten, thermoplastische Eigenschaften aufweisenden Folienstücken und ein Verfahren zur Herstellung derselben.

Tapeten, insbesondere Papiertapeten mit oder ohne Struktur sind bekannt. Tapeten mit Struktur sind meist als Rauhfasertapeten bekannt, bei denen aufeiner Papierschicht unregelmäßig eine Schicht aus Holzspänen angeordnet wird. Andere, mit einer Struktur versehene Tapeten, wie z.B. Prägetapeten, strukturbeschichtete Tapeten sind teuer in der Herstellung und ihre Handhabung und Pflege erfordert viel Sorgfalt. Außerdem sind sie feuchtigkeitsempfindlich.

Aufgabe der vorliegenden Erfindung ist es, eine Wand- oder Möbelverkleidung bzw. eine Wandtapete anzugeben, welche einfach in der Herstellung, vielseitig verwendbar und gebrauchsvorteilhaft ist.

Diese Aufgabe ist durch die im Anspruch 1 angegebene Erfindung gelöst. Danach besteht die erfindungsgemäße Wandverkleidung aus auf einem Träger, insbesondere Papier, regelmäßig oder unregelmäßig angeordneten, thermoplastische Eigenschaften aufweisenden Folienstücken, wobei diese Folienstücke durch Druck- und Temperatureinfluß in sich und mit dem Träger so verbunden sind, daß durch ein gezieltes Aufprägen von Erhebungen eine Oberfläche mit räumlicher Struktur entsteht. Durch das Erwärmen der thermoplastische Eigenschaften aufweisenden Folienstücke auf eine Temperatur, die im Bereich der Schmelztemperatur der Folienstücke liegt, werden diese warmklebrig und verbinden sich unter Druckeinfluß mit dem Träger. Vorteilhafterweise handelt es sich bei den thermoplastische Eigenschaften aufweisenden Folienstücken um Kunststoffolienstücke, insbesondere Stücke aus Polyethylenfolie. Die Folienstücke können auf dem Träger regelmäßig oder unregelmäßig, als eine Schicht oder in mehreren Schichten angeordnet sein. Bei einer Größe der Folienstücke zwischen mehr als einem und zehn Millimeter in Breite und Länge ist deren Handhabung besonders einfach. Bei einer regelmäßigen Anordnung der Folienstücke auf dem Träger, z.B. bei einem Aufschichten der Folienstücke zu einer eine gleichmäßige Dicke aufweisenden Schicht kann die Prägestruktur durch eine Kalanderwalze, eine Siebwalze oder eine Prägeplatte aufgeprägt werden. In einer vorteilhaften Ausgestaltung ist vorgesehen, daß die Folienstücke auf dem Träger in einer Anordnung, die etwa der späteren Prägestruktur entspricht, angeordnet werden und anschließend durch Temperatur- und Druckeinfluß mit dem Träger verbunden werden. Eine gezielte Anordnung der Folienstücke auf dem Träger kann z.B. mittels einer Lochwalze erfolgen. Sollen die die räumliche Oberflächenstruktur bildenden Erhebungen relativ weich und nachgiebig sein, so ist es vorteilhaft, wenn die Verbindung der Folienstücke mit dem Träger unter Einfluß eines zumindest örtlich geringen Druckes erfolgt. Dies kann vorteilhafterweise mittels Andrücken durch Bürsten oder durch einen leichten Walzendruck erfolgen. Sollten die Erhebungen der erfindungsgemäßen Wandverkleidung eine härtere Struktur aufweisen, so kann die Struktur durch Prägung unter hohem Druck vorteilhafterweise durch eine Walze mit Sieb, eine Prägeplatte oder eine Kalanderwalze gegeben werden. Durch eine räumliche Form der verwendeten Folienstücke, insbesondere Kunststoffolienstücke, ist die Dosierung derselben und Anordnung auf dem Träger besonders einfach. Außerdem sind derartige Kunststoffolienstücke "volumenreicher", wodurch die Struktur der daraus entstehenden Erhebungen und dadurch auch die Struktur des gesamten Produktes gezielt erreichbar und elastischer ist als die eines Produktes, das aus flachen Kunststoffolienstücken hergestellt ist. Die Verwendung von Kunststoffolienstücken, welche aus Abfallfolien stammen ist dadurch vorteilhaft, daß derartige saubere Kunststoffolienabfälle unmittelbar und ohne weitere Verarbeitungsschritte eingesetzt werden können.

Das gleiche trifft für den Einsatz von Folienstücken aus einem mindestens einseitig mit einer thermoplastischen Beschichtung versehenem und eine Aluminiumfolienschicht enthaltendem Material zu. Auch diese Materialien können auf die gleiche, oben beschriebene Art und Weise mit dem Träger verbunden werden. Auch für diese Materialien sind keine weiteren Verarbeitungsschritte notwendig, um sie bei dem erfindungsgemäßen Produkt einzusetzen, d.h., diese gleichzeitig zu entsorgen.

Die erfindungsgemäße Wand- bzw. Möbelverkleidung hat den besonderen Vorteil, daß auch verschiedenfarbige Folienstücke eingesetzt werden können, und zwar so gezielt, daß dadurch eine bestimmte Farbmusterung des Produktes erreicht werden kann. Werden z.B. durchsichtige, einfarbige klare Folienstücke als Grundschicht aufgelegt und darauf zur Erzielung einer bestimmten Farbmusterung Stücke aus farbigen Folien abgelegt, so entsteht ohne weitere Verarbeitungsschritte und ohne weitere Farbzugabe eine farbliche Struktur einer derartigen Wandtapete.

In einer Weiterentwicklung sieht die Erfindung vor, daß auch der Träger aus Abfallmaterial stammt, insbesondere aus Abfallpapier, z.B. aus bedrucktem Papier. Durch die vollflächige Anordnung der Kunststoffolienstück auf dem Träger (wobei die farbliche Zusammensetzung und Musterung den Anforderungen an das Fertigprodukt entspricht) ist dieser nicht sichtbar und eine derartige Tapete kann preiswert hergestellt werden. Eine andere Variante sieht vor, daß auf einen aus bereits verarbeitetem Papier bestehenden Träger nur stellenweise Kunststoffolienstücke aufgetragen und mit diesem verbunden werden, die so hergestellte Wandverkleidung im Anwendungsfall mit einer entsprechenden Farbe (wie die Rauhfasertapete) gestrichen wird, wobei die Farbe nur durch das als Träger dienende Papier aufgenommen wird und die farbliche Musterung durch die abgelegten und aus der Ebene hervorstehenden farbigen Kunststoffolienstücke-Erhebungen gegeben wird.

In Ausgestaltung sieht die Erfindung vor, daß auf der die Folienstücke aufweisenden Seite eine sehr dünne Papierschicht angeordnet wird, welche teil- oder vollflächig mit dem Kunststoffolienmaterial und mit dem Träger verbunden wird. Die Verbindung der dünnen Papierschicht mit dem Träger und den darauf angeordneten Folienstücken erfolgt durch die Erwärmung der Oberfläche der insoweit bereits fertigen Wandtapete, z.B. durch Heißluft oder Infrarotstrahlung, und damit durch die Erweichung und das Klebrigwerden des darauf angeordneten Kunststoffmaterials. Die dünne Papierschicht kann anschließend durch ein einfaches Andrücken oder Anbürsten auf die Wandtapete angebracht werden. Die Anordnung der dünnen Papierschicht ist dann von Vorteil, wenn die ganze Oberfläche der Wandtapete gestrichen werden soll, d.h. wenn die gesamte Oberfläche der Wandtapete mit einer farbaufnehmenden Schicht versehen werden soll und muß, da die Kunststoffolienstücke farbabweisend sind. Selbstverständlich kann diese dünne Papierschicht auch aus Altpapier bestehen. Die dünne Papierschicht, welche auf die Kunststoffmaterialschicht bzw. die Kunststoffmaterialerhebungen aufgebracht wird kann in Form einer durchgehenden Bahn vorliegen, sie kann aber auch aus zerkleinertem Altpapier bestehen. Sind die Papierstückchen entsprechend klein, so können sie mit Farbe vermischt als eine Dispersion auf die Tapete aufgetragen oder lose ohne Farbe aufgestreut werden. Diese Art von Tapeten gleicht in ihrem Aussehen insbesondere den Rauhfasertapeten. Die erfindungsgemäße Tapete hat jedoch den Vorteil, daß sie vollständig aus Recyclingprodukten, d.h., aus Altpapier als Träger, aus darauf angeordneten Kunststoffolienabfällen und aus Schnitzeln aus Altpapier als Oberschicht hergestellt werden kann.

Die größte Dicke der so hergestellten Tapeten kann zwischen 3 mm und 0,5 mm liegen. Besonders bei Prägetapeten, insbesondere bei Anwendungen als Wandstoßschutz eignen sich Tapeten mit höheren Erhebungen, also dickeres Material, für Anwendungen im dekorativen Bereich der Wandbeschichtung eignen sich die dünne Materialien. Ein Vorteil der erfindungsgemäßen Produkte ergibt sich auch dadurch, daß sie, da sie aus Folienmaterialien hergestellt sind, beim Aufrollen und Verarbeiten nicht so leicht reißen wie nur aus Papier hergestellte Tapeten. Die Beständigkeit gegen Feuchtigkeitseinflüsse ist gegenüber herkömmlichen Tapeten ebenfalls erhöht.

Die beschriebenen Produkte eignen sich nicht nur als Wandverkleidung, sie eignen sich auch als Möbel- bzw. Deckenverkleidung, kurz, als Verkleidung von Flächen, denen ein bestimmtes Aussehen und evtl. eine bestimmte Struktur gegeben werden soll.

Anhand der Zeichnungen werden Ausführungsbeispiele der erfindungsgemäßen Wandverkleidung näher erläutert. Es zeigen:
- Fig. 1: Eine schematische vergrößerte Darstellung eines Querschnitts einer erfindungsgemäßen Wandverkleidung;
- Fig. 2: eine Darstellung einer Tapete mit einer groben Oberflächenstruktur und einer Papierdeckschicht, und
- Fig. 3: eine schematische Darstellung einer Tapete mit einer feinen Oberflächenstruktur.

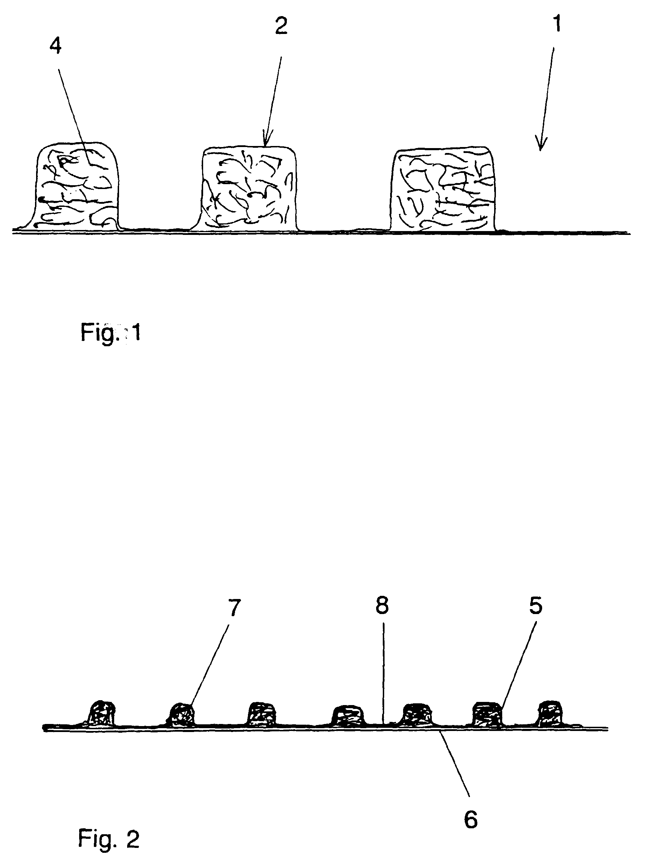

Die in Fig. 1 schematisch dargestellte Wandtapete 1 weist auf einem Papierträger 3 angeordnete Erhebungen 2 auf, die aus miteinander mindestens teilweise verbundenen Stücken 4 aus Kunststoffolien bestehen. Die Kunststoffolienstücke 4 werden mit dem Träger 3 und untereinander durch Wärme- und Druckeinwirkung verbunden.

In Fig. 2 ist eine Wandtapete mit einer relativ groben Struktur dargestellt, wobei die strukturierte Seite der Tapete mit einer dünnen Schicht 5 aus Papier versehen ist. Dadurch ist die gesamte Tapetenoberfläche inklusive Erhebungen 7, die aus Kunststoffmaterial bestehen, farbaufhahmefähig. Der Träger 6 ist in seinen zwischen den Erhebungen 7 befindlichen Bereichen 8 ebenfalls mit der Papierschicht 5 verdeckt.

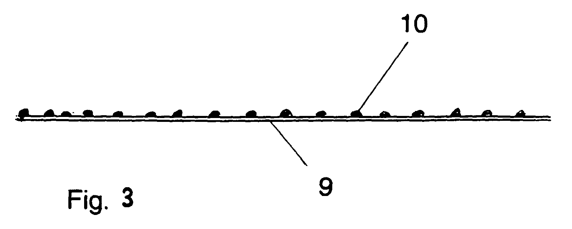

Fig. 3 zeigt eine Darstellung einer Wandtapete mit einer feinen Struktur, die auf einem Träger 9 angeordnete kleine Erhebungen 10 aufweist.

## Patentansprüche

1. Wand- oder Möbelverkleidung, insbesondere Wandtapete, mit einem Träger (3, 6, 9), insbesondere aus Papier, und mit auf diesem regelmäßig oder unregelmäßig angeordneten, thermoplastische Eigenschaften aufweisenden Folienstücken, welche mit dem Träger (3, 6, 9) durch Temperatur- und Druckeinwirkung derart verbunden sind, daß die Oberfläche der Verkleidung mit einer räumlichen Struktur in Form von Erhebungen (2, 7, 10) versehen ist.

2. Wandverkleidung nach Anspruch 1, dadurch gekennzeichnet, daß die Folienstücke (4) eine Größe von etwa 1 bis 10 mm in Länge und Breite aufweisen.

3. Wandverkleidung nach Anspruch 1 oder 2, dadurch gekennzeichnet, daß die Folienstücke (4) den Träger (3, 6, 9) teilflächig oder vollflächig bedecken.

4. Wandverkleidung nach einem der vorangegangenen Ansprüche, dadurch gekennzeichnet daß die Folienstücke (4) als eine Schicht oder in mehreren Schichten auf dem Träger (3, 6, 9) angeordnet sind.

5. Wandverkleidung nach einem der vorangegangenen Ansprüche, dadurch gekennzeichnet, daß die Folienstücke (4) aus Kunststoff, insbesondere aus Polyethylen bestehen.

6. Wandverkleidung nach einem der vorangegangenen Ansprüche, dadurch gekennzeichnet, daß die Folienstücke (4) aus Kunststoffabfallfolien stammen.

7. Wandverkleidung nach einem der vorangegangenen Ansprüche, dadurch gekennzeichnet, daß die Folienstücke (4) räumlich verformt vorliegen.

8. Wandverkleidung nach Anspruch 1 oder 2, dadurch gekennzeichnet, daß die Folienstücke (4) aus einem mindestens einseitig mit einer thermoplastischen Beschichtung versehenen und eine Aluminiumfolienschicht enthaltenden Material stammen.

9. Wandverkleidung nach einem der vorangegangenen Ansprüche, dadurch gekennzeichnet, daß die farbliche Musterung der Wandverkleidung durch verschiedenfarbige Folienstücke (4) gegeben ist.

10. Wandverkleidung nach einem der vorangegangenen Ansprüche, dadurch gekennzeichnet, daß auf der die Folienstücke (4) aufweisenden Seite eine dünne und mit den Erhebungen (7) und dem Träger vollflächig oder teilflächig verbundene Papierschicht (5) angeordnet ist.

11. Wandverkleidung nach einem der vorangegangenen Ansprüche, dadurch gekennzeichnet, daß auf der die Folienstücke (4) aufweisenden Seite eine mindestens mit den Erhebungen verbundene dünne Schicht aus einem farbaufnehmenden Material (5) angeordnet ist.

12. Wandverkleidung nach Anspruch 10 oder 11, dadurch gekennzeichnet, daß die dünne Schicht (5) aus zerkleinertem Papier, insbesondere zerkleinertem Altpapier besteht.

13. Verfahren zur Herstellung einer Wand- oder Möbelverkleidung, insbesondere einer Wandtapete, nach einem der vorangegangenen Ansprüche, dadurch gekennzeichnet, daß auf einem Träger (3, 6, 9), insbesondere Papier, in regelmäßiger oder unregelmäßiger Anordnung thermoplastische Eigenschaften aufweisendem Folienstücke (4) abgelegt und durch Temperatur- und Druckeinwirkung verdichtet und mit dem Träger (3, 6, 9) durch Aufprägen einer räumlichen Struktur verbunden werden.

14. Verfahren nach Anspruch 13, dadurch gekennzeichnet, daß die Folienstücke (4) unter geringem Druck, z.B. mittels Walzen, Bürsten oder dgl. unter Wärmeeinfluß mit dem Träger (3, 6, 9) verbunden werden.

15. Verfahren nach Anspruch 13, dadurch gekennzeichnet, daß die Folienstücke (4) unter hohem Druck mit gleichzeitiger Strukturprägung mit dem Träger (3, 6, 9) verbunden werden.

16. Verfahren nach Anspruch 15, dadurch gekennzeichnet, daß die Folienstücke (4) durch Prägewalze, Walze mit Sieb, Prägeplatte oder einer Kalanderwalze an den Träger (3, 6, 9) angeprägt werden.

17. Verfahren nach einem der Ansprüche 13 bis 16, dadurch gekennzeichnet, daß die Folienstücke (4) der späteren Prägung entsprechend z.B. mittels einer Lochwalze auf dem Träger (3, 6, 9) aufgeschichtet werden.

## Claims

1. Wall or furniture covering, in particular wall tapestry, with a carrier (3,6,9,) in particular of paper and with pieces of film having thermoplastic characteristics arranged regularly or irregularly on it and being connected to the carrier (3,6,9) by the action of temperature and pressure in such a way that the surface of the covering is given a three-dimensional structure in the form of raised portions (2,7,10).

2. Wallcovering according to claim 1, characterised in that the pieces of film (4) have a size of about 1 to 10mm in length and width.

3. Wallcovering according to claim 1 or 2, characterised in that the pieces of film (4) cover the carrier (3,6,9) over part of its area or all of its area.

4. Wallcovering according to one of the foregoing claims, characterised in that the pieces of film (4) are arranged on the carrier (3,6,9) as one layer or in a number of layers.

5. Wallcovering according to one of the foregoing claims, characterised in that the pieces of film (4) comprise plastics, in particular polyethylene.

6. Wallcovering according to one of the foregoing claims, characterised in that the pieces of film (4) originate from scrap plastics film.

7. Wallcovering according to one of the foregoing claims, characterised in that the pieces of film (4) are present in a three-dimensionally shaped form.

8. Wallcovering according to claim 1 or 2, characterised in that the pieces of film (4) originate from a material provided at least on one side with a thermoplastic coating and containing a layer of aluminium foil.

9. Wallcovering according to one of the foregoing claims, characterised in that the coloured pattern on the wallcovering is provided by pieces of film (4) of different colours.

10. Wallcovering according to one of the foregoing claims, characterised in that on the side having the pieces of film (4) there is arranged a thin paper layer (5) having raised portions (7) and connected with the carrier either over its full area or part of its area.

11. Wallcovering according to one of the foregoing claims, characterised in that on the side having the pieces of film (4) there is arranged a thin layer of a coloured material (5) connected at least to the raised portions.

12. Wallcovering according to claim 10 or 11, characterised in that the thin layer (5) comprises shredded paper, in particular shredded scrap paper.

13. Process for manufacturing a wall or furniture covering, in particular a wall tapestry, according to one of the foregoing claims, characterised in that pieces of film (4) having thermoplastic characteristics are deposited on a carrier (3,6,9) in particular paper, in a regular or irregular arrangement and compressed by the action of heat and pressure and are connected to the carrier (3,6,9) by stamping to form a three-dimensional structure.

14. Process according to claim 13, characterised in that the pieces of film (4) are connected to the carrier (3,6,9) under low pressure, e.g. by means of rollers, brushes or the like under the action of heat.

15. Process according to claim 13, characterised in that the pieces of film (4) are connected to the carrier (3,6,9) under high pressure with simultaneous stamping of the structure.

16. Process according to claim 15, characterised in that the pieces of film (4) are stamped onto the carrier (3,6,9) by stamping rollers, perforated rollers, stamping plates or a calender roller.

17. Process according to one of claims 13 to 16, characterised in that the pieces of film (4) are coated onto the carrier (3,6,9) in accordance with the subsequent stamping e.g. by means of a perforated roller.

## Revendications

1. Revêtement mural ou d'ameublement, notamment papier mural, avec un support (3, 6, 9), notamment en papier, et avec des morceaux de films, disposés de manière régulière ou irrégulière sur ce dernier et présentant des propriétés thermoplastiques, assemblés avec le support (3, 6, 9) sous l'effet de ta température et de la pression, de sorte que la surface du revêtement soit pourvue d'une structure spatiale sous forme de reliefs (2, 7, 10).

2. Revêtement mural suivant la revendication 1, caractérisé par le fait que les morceaux de films (4) présentent une grandeur d'environ 1 à 10 mm en longueur et en largeur.

3. Revêtement mural suivant la revendication 1 ou 2, caractérisé par le fait que les morceaux de films (4) recouvrent le support (3, 6, 9) sur toute ou sur une partie de la surface.

4. Revêtement mural suivant l'une des revendications précédentes, caractérisé par le fait que les morceaux de films (4) sont disposés sur le support (3, 6, 9) sous forme de couche ou en plusieurs couches.

5. Revêtement mural suivant l'une des revendications précédentes, caractérisé par le fait que les morceaux de films (4) sont en matière plastique, en particulier en polyéthylène.

6. Revêtement mural suivant l'une des revendications précédentes, caractérisé par le fait que les morceaux de films (4) proviennent de déchets de films plastiques.

7. Revêtement mural suivant l'une des revendications précédentes, caractérisé par le fait que les morceaux de films (4) se présentent déformés spatialement.

8. Revêtement mural suivant la revendication 1 ou 4, caractérisé par le fait que les morceaux de films (4) proviennent d'un matériau pourvu, au moins d'un côté, d'un revêtement thermoplastique et contenant une couche de film d'aluminium.

9. Revêtement mural suivant l'une des revendications précédentes, caractérisé par le fait que le motif de couleur du revêtement mural est conféré par des morceaux de films (4) de couleur différente.

10. Revêtement mural suivant l'une des revendications precédentes, caractérisé par le fait que sur la face présentant les morceaux de films (4) est disposée une mince couche de papier (5) assemblée, sur toute ou sur une partie de la surface, avec les reliefs (7) et le support.

11. Revêtement mural suivant l'une des revendications précédentes, caractérisé par le fait que sur la face présentant les morceaux de films (4) est disposée une mince couche de matériau (5) absorbant la couleur, assemblée au moins avec les reliefs.

12. Revêtement mural suivant la revendication 10 ou 11, caractérisé par le fait que la mince couche (5) est composée de papier déchiqueté, notamment de vieux papier déchiqueté.

13. Procédé de fabrication d'un revêtement mural ou d'ameublement, notamment papier mural, suivant l'une des revendications précédentes, caractérisé par le fait que, sur un support (3, 6, 9), notamment papier, des morceaux de films présentant des propriétés thermoplastiques sont déposés selon une disposition régulière ou irrégulière et, sous l'effet de la température et de la pression, comprimés et assemblés avec le support (3, 6, 9) par estampage d'une structure spatiale.

14. Procédé suivant la revendication 13, caractérisé par le fait que les morceaux de films (4) sont assemblés, sous l'effet de la chaleur, avec le support (3, 6, 9), sous une faible pression, par exemple par laminage, brossage ou autre.

15. Procédé suivant la revendication 13, caractérisé par le fait que les morceaux de films (4) sont assemblés avec le support (3, 6, 9) sous haute pression, avec estampage simultané de la structure.

16. Procédé suivant la revendication 15, caractérisé par le fait que les morceaux de films (4) sont estampés sur le support (3, 6, 9) par un cylindre d'estampage, un cylindre à tamis, une plaque d'estampage ou un cylindre de calandrage.

17. Procédé suivant l'une des revendications 13 à 16, caractérisé par le fait que les morceaux de films (4) sont disposés en couches sur le support (3, 6, 9) en fonction de l'estampage ultérieur, par exemple, à l'aide d'un cylindre perforé.
